# EUROPEAN PATENT APPLICATION

(11) **EP 1 834 604 A1**
(43) Date of publication of application: **19.09.2007**
(21) Application number: 07005282.4
(22) Date of filing: 14.03.2007
(51) Int. Cl.: A61C 8/00

(54) **Post-extractive conditioning dental implant**

(30) Priority: 17.03.2006 IT TO20060201
(71) Applicant: C.I.R.G. S.r.l., 10129 Torino (IT)
(72) Inventor: Gatti, Claudio, 10129 Torino (IT)
(74) Representative: Lotti, Giorgio

(57) **Abstract**

Post-extractive conditioning dental implant in which the part of the implant that is to be housed in the bone (12) is made of a core (4) threaded (5), the terminal end (10) of the core, which is to stand above the bone (12), has a conditioning cup (1) continuing in a post (3) with polygonal section; the cup (1) being shaped as a double cone (6 and 7) where the inferior diameters (8, 9) of the cones are joined with the post (3) and the head (10) of the core (4), while the larger diameters (11) create the joint line between the two cones (6 and 7).

## Description

Object of the present invention is a post-extractive conditioning dental implant.

The immediate loading in implantology is rapidly becoming a symbol for the diffusion and simplification of the very same implant modalities which not only preceded it, but also opposed to it up to now.

The technique to insert the single stage implant undertakes the direct perforation of the gengival tissue without raising a flap, with the use of no more than two or three calibrated drills and a calibrated tapping drill before inserting the implant.

The calibrated drills are 2 mm. shorter than the corresponding implant. The transgengival perforation creates surgically a cylinder shaped alveolar cavity with a diameter ranging between 1.8 and 3 mm.

The completion of the alveolar site is achieved by screwing a calibrated tapping drill. The specific core-thread ratio allows the tapping drill to self tap into the bone, and self progress in depth. The insertion is performed with a screw driver or a twister.

The axial effort applied by the screw driver informs the operator about the density of the bone and about the primary stability of the implant.

The shape of the terminal end of the tapping drill allows to minimize the risk of damaging any nearby sensitive structure, which by no means will contact high speed rotating instruments, by enlarge more harmful.

The very concept of safety is exalted by the shape of the implant apex which is conceived to perfectly fit the alveolar cavity left by the tapping drill without repeating the shape of its terminal end : in case of strict proximity to sensitive structures this shape could generate fisical phenomena of wrong unloading forces.

The impact of the implant first cup onto the cortical bone enhances the stability of the implant according to the single stage technique (cortical bone support), and exactely shows the matching of the inserted implant to the bone cavity as pre-determined with the template film.

The post emerging through the gengival tissue has a diameter ranging between 2,8 mm. and 8 mm. according to the implant diameter, and is shaped with a chamfer: it is therefore possible to treat it as a natural post as far as the impressions are concerned. In post-extractive implantology, or in cases of minimal gengival retraction, this chamfer can be modified in situ with high speed milling drills for titanium until the ideal final shape of the post emerging through the gengival tissue is reached.

The same milling technique used to reach the final shape of the hexagonal post can be used to correct the vertical axis of the post, and reach a perfect parallelism.

Exception being made for the above quoted post-extractive cases, the single stage technique does not require a long healing time of the soft tissues as it happens with the two stages technique : as no opercula are needed, the soft tissues are immediately healthy, adherent and cheratinized.

The implant being made in titanium grade 4 , it proves to be very strong and drastically limits the possibility of implant fracture due to excessive torque effort.

The specific ratio between the inclination of the threads and their width exalts the capacity of the ICP implant to penetrate the bone and progress automatically in a simple yet powerful manner. In the vergin bone the threads are self tapping, with the minimal biological damage and the maximal primary stability. In case the bone density proves to be unfavourable for any reason, the clinician can choose to electrically weld all the implant posts together with a specific machine, so that they could behave like a single solid structure.

It becomes therefore evident that it is possible to successfully apply the immediate loading even in unfavourable bone situations if a further device is used which can help to dissipate the loading forces acting on the implants: namely the electrowelded bar.

According to claim 1, the invention is now presenting a new type of post-extractive conditioning implant, whereby the principles of cortical bone support, typical of the single stage technique with large threads implants, are applied to the bone and to the gengival tissue by means of the particularly shaped part of the implant which stands out of the bone.

As a result of this choice, new implants have been developed with the aim to dissipate on the largest surface the loads acting on the bone and to reach the best aesthetic results.

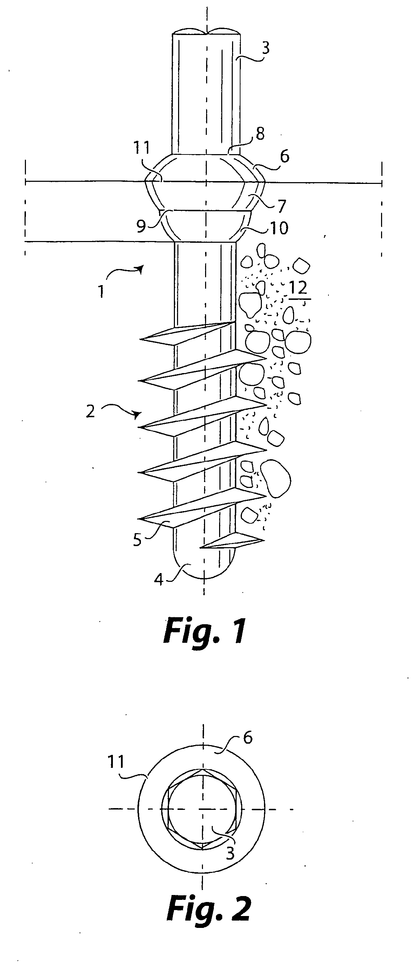

The implant will now be described according to the invention, references being made on the alleged drawings where Fig. 1 shows the implant in situ with longitudinal view, and Fig. 2 shows the same implant as pointed by arrow A in Fig. 1.

The implant 2 as a whole shows a core 4, threaded in 5, continuing with a conditioning cup 1, followed by a post 3, with polygonal section, preferably hexagonal.

The conditioning cup 1 applied to a post-extractive implant 2 according to the invention, shows a double cone shape 6 and 7, where the inferior diameters of the cones are joined 8 with section 3 and 9 to the head 10 of the core 4, and the larger diameters 11 are the joint line with the two cones 6 and 7.

Once in situ the core 4 will be in the bone 12, while its head 10 and the inferior cone 7 of the conditioning cup 1 will be inserted in the hole of the gengival mucosa 13 and the cone 6 and the post 3 stand out of the gengiva.

The conditioning cup 1, owing to its shape and to how it is housed into the gengiva 13, allows not only a better retention of the biomaterials present in the alveolar cavity, as indicated in the modality, but also a perfect tissue healing because the gengiva surrounding the alveolar cavity finds immediately a proper surface to lay on, which behaves as the lost dental element.

Very often the conditioning cup 1 makes the suture totally unnecessary after the extraction of the tooth.

The difference with all the other healing caps on the market is that the conditioning cup of the ICP implant has a hexagonal post capable to support immediately a non occluding aesthetic provisional crown.

This type of implant can easily allow the clinician to bind many implants together immediately after they have been inserted in the bone, with the provisional electrowelding of all the posts.

In any case the healing times before loading are drastically reduced, because of the optimal extension of the threads into the bone and the total absence of secondary healing in the peri-implant space, as it normally happens with traditional two stages implants.

At microscopic level the gap between the implant surface and the surgically created alveolar cavity is in fact too large after the drilling, as far as the traditional implants are concerned, where the bone needs particularly long waiting times to heal.

In post-extractive immediate implants, the particular shape of the transmucosal part of this implant offers a far better bone and soft tissue support, as these tissue structures are demanded to fill a far smaller space gap, therefore reaching final healing very rapidly. The one to one ratio between the thread 5 of the implant and its own mucosal emergence (larger diameter 11 of the cones in 1), allows to properly fill alveolar cavities as large as 8 mm.; no other implant on the market can reach this result.

At bone level, a further bone support is reached at cortical level, in the upper periphery of the alveolar cavity, which drastically reduces the torque lever effect, responsible for the majority of the failures in immediate loading of post-extractive modalities.

The prosthetic phase of this implant is furthermore simplified by the chamfer in the emerging post 3 which conditions a periodontal and aesthetic result which can hardly be obtained by any other single stage implant on the market today.

## Claims

1. Post-extractive conditioning dental implant in which the part of the implant that is to be housed in the bone (12) is made of a core (4) threaded (5), the terminal end (10) of the core, which is to stand above the bone (12), has a conditioning cup (1) continuing in a post (3) with polygonal section; the cup (1) being shaped as a double cone (6 and 7) where the inferior diameters (8, 9) of the cones are joined with the post (3) and the head (10) of the core (4), while the larger diameters (11) create the joint line between the two cones (6 and 7).

2. Implant according to the claim 1, where once in situ the head (10) of the core (4) and the inferior cone (7) of the cup (1) are housed in the hole of the gengival mucosa (13) and the upper cone (6) of the cup (1) with the post (3) stand out of the gengiva.

3. Implant according to the claim 1, where there is a one to one ratio between the diameter of the implant thread (5) and the larger diameter (11) of the cones in the cup (1).
